(19) Europäisches Patentamt
European Patent Office
Office européen des brevets

(11) Veröffentlichungsnummer: **0 013 267**
**B1**

(12) # EUROPÄISCHE PATENTSCHRIFT

(45) Veröffentlichungstag der Patentschrift: **23.06.82**

(51) Int. Cl.³: **B 32 B 29/00**, B 32 B 31/28, D 21 H 1/04

(21) Anmeldenummer: **79890066.8**

(22) Anmeldetag: **19.12.79**

(54) **Verfahren zur Herstellung von Schichtstoffen.**

(30) Priorität: **22.12.78 AT 9225/78**

(43) Veröffentlichungstag der Anmeldung: **09.07.80 Patentblatt 80/14**

(45) Bekanntmachung des Hinweises auf die Patenterteilung: **23.06.82 Patentblatt 82/25**

(84) Benannte Vertragsstaaten: **CH DE FR**

(56) Entgegenhaltungen:
**DE-A-1 629 307**
**FR-A-2 294 036**
**GB-A-665 191**
**GB-A-843 437**
**GB-A-1 223 760**
**US-A-3 658 620**

(73) Patentinhaber: **Österreichisches Forschungszentrum Seibersdorf Gesellschaft m.b.H., Lenaugasse 10, A-1082 Wien (AT)**

(72) Erfinder: **Wendrinsky Josef, Dipl.-Ing., Brückengasse 10-12/11/29, A-1060 Wien (AT)**
Erfinder: **Proksch, Emil, Prof.Dipl.-Ing.Dr., Laaerbergstrasse 34-38/9/24, A-1100 Wien (AT)**
Erfinder: **Grienauer, Walter, Lorenz Mandlgasse 36-38/2/4/13, A-1160 Wien (AT)**

**EP 0 013 267 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Verfahren zur Herstellung von Schichtstoffen

Die Erfindung bezieht sich auf ein Verfahren zur Herstellung von Schichtstoffen, wobei zumindest eine mit einer Kunstharz enthaltenden Lösung imprägnierte Schicht aus Papier mit mindestens einer weiteren Schicht durch Aushärten des Kunstharzes mittels ionisierender Strahlen, insbesondere Elektronenstrahlen, verbunden wird. Solche, z. B. im Bereich der Elektronik, des Maschinenbaues, der Bautechnik und Holzverarbeitungstechnik vielfältig angewendeten auch Schichtpreßstoffe genannten Schichtstoffe werden üblicherweise unter der Einwirkung von Druck und Temperatur hergestellt:

Papierbahnen bestimmter, vom Verwendungszweck des Schichtpreßstoffes abhängiger Qualität und Grammatur werden mit einer meist wäßrigen Kunstharzlösung bis zu einer bestimmten Beladung getränkt. Nach einem Trockenvorgang, der neben dem Entfernen des Wasser auch eine partielle Kondensation des Kunstharzes bewirkt, werden die Bahnen in Formate geschnitten, sogenannte Prepegs, die infolge der bereits eingeleiteten Härtungsreaktion nur eine beschränkte Lagerzeit besitzen. Diese Prepregs werden dann je nach Art des gewünschten Endprodukts in einer bestimmten Reihenfolge zu 2 bis 20 und mehr Lagen gestapelt und in Etagenpressen, die zugleich eine größere Anzahl solcher Stapel aufnehmen können, heiß verpreßt. Dabei wird das Aussehen der Oberfläche von der Struktur der auf dem Stapel anliegenden Stahlblechplatte bestimmt. Nach einer Abkühlung unter Druck muß das Laminat nur noch besäumt und seine Unterseite zur besseren Verklebbarkeit aufgerauht werden, die unterschiedlichen Anwendungsarten erfordern jeweils die Auswahl bestimmter Papiersorten und Kunstharzmischungen sowie eine sorgfältige Beachtung der Verfahrensparameter. So wird beispielsweise bei Dekorschichtpreßstoffplatten für den Kern phenolharzimprägniertes Kraftpapier mit einem Flächengewicht von 80 bis 250 g/m² gewählt. Als Harze für die farbgebenden Schichten, hochpigmentierte Dekorpapiere, und für das Overlay, ein hochgradiges Alphazellulosepapier mit einem Flächengewicht von 15 bis 50 g/m², werden Melamin-Formaldehydvorkondensate eingesetzt. Die Harzanteile sind unterschiedlich, sie betragen beispielsweise beim Kernpapier bis zu 40%, beim Dekorbogen bis zu 50% und beim Overlay bis zu 75%. Der Grammatur der Papiere sind durch den Tränkungsverlauf, der rasch und möglichst homogen erfolgen soll, sowie durch möglichst kurze Trockenzeiten nach obenhin Grenzen gesetzt. Das Ausmaß der Beladung der Papiere un die Art des Harzes bestimmen im Prinzip die Herstellungsparameter, die Temperatur, den Druck und die Dauer des Preßvorgangs. So können beispielsweise bei der Herstellung von Dekor-Schichtpreßstoffplatten entsprechende Preßsteg-Stapel bei 130 bis 180° C mit 1 bis 12 MPa verpreßt werden, wobei ein Preßzyklus bis zu 90 Minuten beansprucht.

Dieses Verfahren weist eine Reihe von verfahrensbedingten Nachteilen auf, die in der Folge näher erläutert werden: So muß der Trocknungsprozeß der imprägnierten Bahnen genau auf ein spezielles Harzsystem abgestimmt werden; mit der Entfernung des Wassers darf die Präkondensation des Harzes nur so weit vorangetrieben werden daß weder die Lagerfähigkeit zu sehr beschränkt, noch das Verbinden der Schichten beim späteren Verpressen verhindert wird. Die aus dem Trockenprozeß hervorgehenden Papiere werden nach dem Zuschnitt auf ein bestimmtes Format chargenweise verpreßt. Ein kontinuierlicher Betrieb ist hier im Regelfall nicht möglich. Bei diesem Verfahren entsteht zudem eine große Menge Formaldehyd, das aufwendig entfernt werden muß.

Um die Preßtemperatur, den Druck und die Dauer eines vollständigen Zyklus abzukürzen, wurden der Harzaufbau und die Zusammensetzung vielfältigen Modifizierungen unterzogen. Diese erfolgten zum Teil durch Verätherung, zum Teil durch Zusatz anderer, ankondensierbarer Harztypen, wie Polyester u. dgl. Diesen Versuchen war nur insofern Erfolg beschieden, als die Werte der Parameter bei Trocknung und Verpressen nur bei gleichzeitiger Verschlechterung der Eigenschaften der Schichtstoffplatte verringert werden konnten, so daß nur bei speziellen Anwendungen Vorteile erzielt wurden. Die Freisetzung des bei der Endkondensation gebildeten Formaldehyds konnte praktisch nicht unterbunden werden. Ein vollständiger Ersatz der Formaldehyd-Kondensationsharze führte zu qualitätsmäßig nicht konkurrenzfähigen Produkten.

Während die nach den herkömmlichen Verfahren hergestellten Dekor-Schichtstoffplatten für die Anwendung in trockenen, witterungsgeschützten Räumen hervorragende Eigenschaften besitzen, sind sie im Freien nur begrenzt einsatzfähig, weil der Schichtverband durch die, wenn auch nur geringfügige, Wasseraufnahme über längere Zeiträume gewisse Auflösungserschienungen zeigt. Die bei Holz angewandte Praxis der Lackierung kann wegen der Unverträglichkeit der Oberfläche mit gängigen Lacksystemen hier nicht angewandt werden.

Es sind Verfahren bekannt geworden, bei welchen Papieren mit bestimmten Monomeren gepfropft wird, um diesem bestimmte Eigenschaften zu verleihen. So wird z. B. nach der DE-A-2 213 052 Papier mit Styrol getränkt und mittels Gammastrahlung aufgepfropft.

Solcherart hergestellte imprägnierte Papiere müssen wegen des teilweise recht niedrigen Umsatzes von Restmonomeren befreit werden, die dann unter Beachtung der Richtlinien über Schadstoffkonzentration und Explosionsgrenzen unter großem Aufwand rückgeführt und aufgearbeitet werden müssen. Wegen des relativ hohen Dosisbedarfs an Gammastrahlen können diese Verfahren kaum zu einem kontinuierlichen Prozeß gestaltet werden.

In der US-A-3 658 620 ist ein Verfahren zur Herstellung von Schichtstoffen beschrieben, bei dem

eine Schicht aus Papier mit einer ein polymerisierbares Kunstharz enthaltenden Lösung imprägniert und mit einer weiteren Schicht aus Sperrholz durch Aushärten des Kunstharzes mittels ionisierender Strahlung verbunden wird. Gemäß dieser US-A wird die auf die obere Bahn aufgebrachte Tränkung mittels einer eigenen Elektronenstrahleinrichtung zunächst nur vorpolymerisiert; anschließend erfolgt die Fixierung der Verbindung dieser Papierbahn mit der die Unterlagsbahn bildenden Sperrholzbahn nach dem Durchlaufen eines Druckrollenpaares, wo es unter Druckanwendung zur Verklebung der beiden Bahnen kommt, durch die Auspolymerisation der bei dem Preßvorgang vorgenommenen Verklebung mittels einer zweiten Bestrahlungseinrichtung.

Es wird daher ein mit Kunstharz getränktes Papier, dessen Kunstharz-Imprägnierung vorpolymerisiert wird, mit seiner der Luft zugewandten und daher nicht gehärteten und klebrigen Seite mit Sperrholz, das mit einer klebrigen Beschichtung versehen ist, kontaktiert und dabei in einem Preßvorgang ohne Einwirkung von ionisierender Strahlung verbunden. Diese Verbindung von mit vorpolymerisierter Harz-Tränkung versehenem Papier und Sperrholz erfolgt durch den Druck des als »compressing roller« bezeichneten Walzenpaares. Während der den Auspolymerisationsprozeß bewirkenden Einwirkung der ionisierenden Strahlung der zweiten Bestrahlungseinrichtung sind die Papier- und die Sperrholzschicht bereits durch die beiden klebenden Schichten miteinander verbunden. Infolge der Starrheit von Sperrholz kann der Papier-Sperrholz-Verbund nicht — auch nicht durch die Wirkung des Förderbandes — unter Zugeinwirkung kommen.

Bei diesem Verfahren erfolgt die Verbindung der oberen mit der unteren Bahn daher zunächst durch Verklebung unter Druckanwendung mittels eines Druckrollenpaares und anschließend die Fixierung dieser Verklebung durch deren nachträgliche Härtung mittels der zweiten Bestrahlungseinrichtung.

In der GB-A-843 437 wird ein Verfahren zur Herstellung von Hohlkörpern aus imprägniertem Material beschrieben, bei dem erst nach Abschluß des Aufwickelvorganges, und daher ohne Zug- oder Druckeinwirkung, die Aushärtung des Imprägniermittels durch Bestrahlung erfolgt.

Im Gegensatz zu der Offenbarung der oben näher erläuterten Patentanmeldungen wurde gefunden, daß zwei oder mehr mit polymerisierbarem Kunstharz getränkte Papierbahnen sich dann besonders vorteilhaft miteinander zu einem Schichtstoff verbinden lassen, wenn sie bei gleichzeitiger Einwirkung von ionisierender Strahlung unter Zugeinwirkung zusammengeführt werden.

Das erfindungsgemäße Verfahren zur Herstellung von Schichtstoffen, wobei zumindest eine Schicht aus Papier mit einer Kunstharz enthaltenden Lösung imprägniert und mit mindestens einer weiteren Schicht durch Aushärten des Kunstharzes mit ionisierender Strahlung, insbesondere Elektronenstrahlung, verbunden wird, ist dadurch gekennzeichnet, daß die mit der Kunstharz enthaltenden Lösung imprägnierte, noch Flüssigkeit enthaltende Papierschicht der weiteren Schicht unter Zug ohne Preßvorgang zusammengeführt und verbunden wird, wobei die ionisierende Strahlung im Bereich der Zugbeanspruchung einwirkt.

Es war durchaus überraschend, daß durch Zugeinwirkung eine gleiche Ausrichtung der Papierbahn und daher des Schichtstoffes, wie bei dem bisher üblichen Preßvorgang erreicht werden kann, wobei gleichzeitig der Nachteil der geringen Eindringtiefe verschiedener ionisierender Strahlen nicht mehr zum Tragen kommt, da beim erfindungsgemäßen Verfahren zwischen Strahlenquelle und Papierschicht kein, den Preßdruck ausübender Stempel vorgesehen werden muß.

Die Papiere, die in Form von Blättern oder Bahnen hintereinander oder zugleich mit der gleichen oder mit unterschiedlichen Imprägnierflüssigkeiten bis zu einer bestimmten Beladung getränkt werden, werden durch eine besondere Papierführung mittels Zug in engen Kontakt miteinander gebracht und an der Stelle der Zugbeanspruchung durch den Einfluß ionisierender Strahlen miteinander verbunden. Die Festigkeit der mit Imprägnierlösung getränkten Papiere ist ausreichend, um der im Prozeß erforderlichen Zugbeanspruchung zu widerstehen, welche im übrigen die Volumensänderung während der Vernetzung ausgleichen kann, so daß schließlich ein planes Endprodukt erhalten wird.

Gemäß einer bevorzugten Ausführungsform des Verfahrens ist vorgesehen, daß die weitere Papierschicht, bzw. mehrere weitere Papierschichten in der gleichen Weise wie die erste Papierschicht mit einer Kunstharz enthaltenden Lösung imprägniert ist bzw. sind und noch Lösungsflüssigkeit enthält bzw. enthalten. Die im Verfahren eingesetzten Papiere können von unterschiedlicher Qualität und Grammatur sein, wie z. B. Kernpapiere oder hoch raffinierte Alphazellulosepapiere, sie können pigmentiert, bedruckt, gefärbt oder auch mit Kunstfasern verstärkt sein. Die Papiere können bereits maßgerecht geschnitten oder als Papierbahn in das Verfahren eingebracht werden. Die Imprägnierung kann nach bekannten Verfahren erfolgen und wird von der Art des Papiers, der Imprägnierflüssigkeit und dem Ausmaß der Beladung abhängen. Sie kann direkt oder indirekt erfolgen, in einem Durchlauf durch das Bad oder abgesetzt, gegebenenfalls durch eine oder mehrere Beatmungs- und Auspreßschritte unterbrochen. Die Benetzung kann zuerst auch einseitig erfolgen, um eine bessere Durchbringung des Papiers zu erreichen. Die Aufbringung der Imprägnierflüssigkeit kann aber auch indirekt über Walzen erfolgen, die wie beim »reverse roll coater« zugleich die aufzubringende Menge begrenzen, was aber auch durch Abquetschwalzen oder mittels einer Rakel und einer Gegenwalze erfolgen kann. Außer durch die genannten Methoden kann eine Imprägnierung auch noch durch Spritzen und Gießen erfolgen. Die Methoden können bedarfsmäßig auch kombiniert werden.

Dadurch, daß der Zug auf eine oder mehrere, noch Flüssigkeit enthaltende Papierschicht bzw. -schichten ausgeübt wird, kann auf besonders rasche und einfache Art und Weise eine kontinuierliche Herstellung von Schichtstoffen erreicht werden. Diese Vorgangsweise kann insbesondere deshalb eingehalten werden, da die Festigkeit der Papierschicht bzw. -schichten ausreicht, um die relativ geringen Zugkräfte aufzunehmen, und, da keine Presse vorgesehen ist, ein leichteres Entweichen von Lösungsmitteln, solange noch keine vollständige Aushärtereaktion stattgefunden hat, eintreten kann.

Eine besonders glatte Oberfläche des Verbundstoffes kann erzielt werden, indem die Papierschicht während der Einwirkung der ionisierenden Strahlen und des Zuges auf einer glatten Fläche aufliegt.

Einfach kann sich die Herstellung von Rohren oder anderen Hohlgegenständen nach dem erfindungsgemäßen Verfahren gestalten, indem die Papierschicht mit dem noch nicht gehärteten Kunstharz um einen Dorn oder dgl. gewunden wird, wobei dies vorteilhafterweise während der Einwirkung der ionisierenden Strahlen erfolgen kann.

Die Imprägnierflüssigkeit kann von einem verdünnten radikalischpolymerisierbaren Kunstharz, von einem Gemisch mehrerer solcher Kunstharze oder auch von einer Lösung dieser gebildet werden, wobei das Lösungsmittel als inerter Verdünner vorliegt, der gegebenenfalls vor der Einwirkung der ionisierenden Strahlen entfernt wird, oder günstigerweise als reaktives Monomer oder in Form von Mischungen mehrerer solcher Monomerer, die mit dem Kunstharzanteil unter dem Einfluß der Strahlen copolymerisieren.

Als besonders vorteilhaft hat es sich erwiesen, ein Kunstharz zu verwenden, das Verbindungen enthält, die im Durchschnitt mindestens eineinhalb $\alpha,\beta$-olefinisch ungesättigte Mono- oder Dikarbonsäuregruppierungen pro Molekül enthalten. Dadurch kann auch bei Einwirken einer geringen Dosis eine hohe und vollständige Vernetzung erreicht werden.

Gemäß einem weiteren Merkmal der Erfindung wird ein Kunstharz verwendet, das im Durchschnitt mindestens eineinhalb ungesättigte Bindungen pro Molekül enthält, das Verbindungen der allgemeinen Formel I,

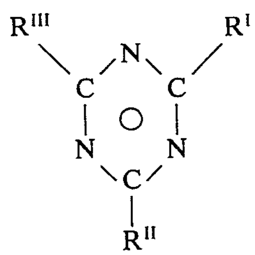

(I)

in der $R^I$, $R^{II}$ und $R^{III}$ gleich oder voneinander verschieden, ein Hydroxylrest oder O – R, wobei R ein gesättigter oder ungesättigter aliphatischer oder aromatischer Kohlenwasserstoffrest mit bis zu 20 C-Atomen bedeutet,

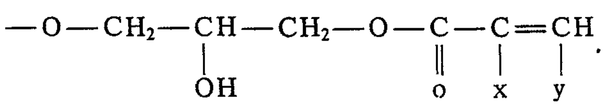

und

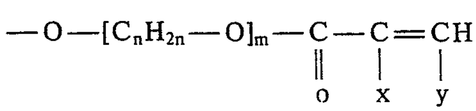

wobei n eine ganze Zahl zwischen 2 und 20, m eine ganze Zahl zwischen 1 und 10, und x Wasserstoff oder den Methylrest, y Wasserstoff, den Methylrest, – COOH und – COOR, worin R die obenangeführte Bedeutung hat, bedeuten,

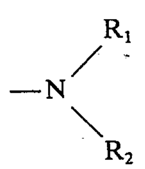

wobei $R_1$ und $R_2$ gleich oder voneinander verschieden sind, Wasserstoff, ein aromatischer, gesättigter oder ungesättigter aliphatischer Kohlenwasserstoffrest mit bis zu 20 C-Atomen, – $CH_2OH$, – $CH_2OR$, wobei R ein gesättigter oder einfach ungesättigter aliphatischer Rest mit bis zu 20 C-Atomen bedeutet,

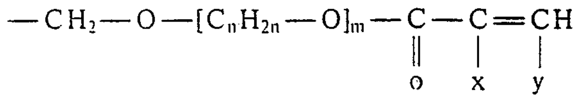

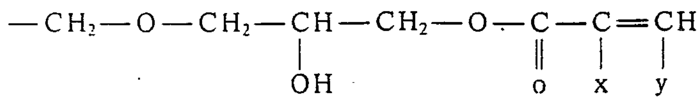

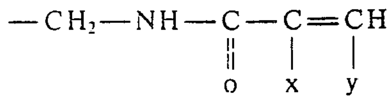 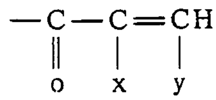

wobei x, y, n und m die obenangeführte Bedeutung besitzen, bedeuten, enthält.

Typische Vertreter derartiger Verbindungen sind:

N',N'',N'''-Triacryloyl-2,4,6-triamino-s-triazin,
Tris-(acryloyloxyäthoxymethyl)-tris-(äthoxymethyl)-2,4,6-triamino-s-triazin,
Hexakis-[(2-acryloyloxypropoxy)methyl]-2,4,6-triamino-s-triazin,
Bis-(acryloyloxymethyl)-methoxymethyl-2,4,6-triamino-s-triazin,
Tris-(acryloyloxytripropylenglykoloxymethyl)-tris-(äthoxymethyl)-2,4,6-triamino-s-triazin,
Bis-(acrylamidomethyl)-methoxymethyl-2,4,6-triamino-s-triazin,
N',N'',N'''-Tris-[(3-acryloyloxy-2-hydroxypropoxy)methyl]-2,4,6-triamino-s-triazin,
Bis-(acryloyloxyäthoxymethyl)-tetrakis-[(4-acryloy]-oxybutoxy)methyl]-2,4,6-triamino-s-triazin,
Bis-(acryloylpropoxymethyl)-allyloxymethyl-2,4,6-triamino-s-triazin,
2,4,6-Tris-(acryloyloxyäthoxy)-s-triazin,
1,3,5-Tris-(acryloyloxyäthyl)-s-triazin,
2,4,6-Tris-[3-(methoxymaleoyloxyäthyl)-2-hydroxypropoxy]-s-triazin,
2,4-Bis-[2-(methoxymaleoyloxy)äthoxy]-6-methoxyäthoxy-s-triazin.

Verbindungen dieser Art können nach DE-B-1 005 270, US-A-3 535 148, Jap. Pat. 7 141 615, DE-A-2 550 740, DE-C-930 779 und J. Am. Chem. Soc. 70, 343 (1948) hergestellt werden.

Diese Verbindungen bewirken, daß die Festigkeit des Papiers vollauf erhalten bzw. vergrößert wird, so daß ein entsprechend hoher Zug ausgeübt werden kann. Weiters weisen derartige Produkte, wie bekannt, ein besonders hohes Eigenschaftsniveau auf.

Besonders vorteilhaft hat sich auch die Verwendung eines Kunstharzes erwiesen, das im Durchschnitt mindest eineinhalb ungesättigte Bindungen pro Molekül enthält, welches Verbindungen der allgemeinen Formel II,

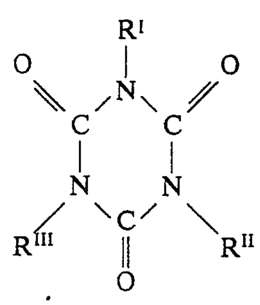

(II)

worin $R^I$, $R^{II}$ und $R^{III}$ gleich oder voneinander verschieden sind, Wasserstoff, ein gesättigter oder ungesättigter aliphatischer oder aromatischer Rest mit bis zu 20 C-Atomen,

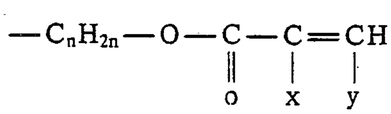

,

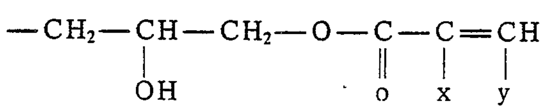

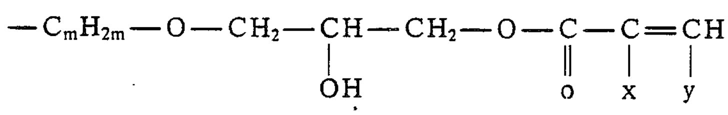

bedeuten, worin n eine ganze Zahl zwischen 2 uns 20 m eine ganze Zahl zwischen 1 und 20, sowie x Wasserstoff oder $CH_3$, y Wasserstoff, den Methylrest, $-COOH$ und $-COOR$, worin R die obenangeführte Bedeutung hat, bedeuten, enthält.

Als typische Vertreter sind folgende Verbindungen zu nennen:

1,3,5-Tris-(3-acryloyloxy-2-hydroxypropyl)-2,4,6-trioxo-s-triazin,
1,3,5-Tris-[2-(3-methacryloyloxy-2-hydroxypropoxy)-äthyl]-2,4,6-trioxo-s-triazin,
1,3,5-Tris-(2-acryloyloxyäthyl)-2,4,6-trioxo-s-triazin,
1,3-Bis-(3-methacryloyloxy-2-hydroxypropyl)-5-propyl-2,4,6-trioxo-s-triazin,
1,3,5-Tris-[2-(3-(methoxymaleoyloxy)-2-hydroxypropoxy)äthyl]-2,4,6-trioxo-s-triazin,
1,3-Bis-[2-(methoxymaleoyloxy)äthyl]-5-äthyl-2,4,6-trioxo-s-triazin

Verbindungen dieser Art können z. B. nach der US-A-3 733 287 hergestellt werden.

Erfindungsgemäß kann auch ein Kunstharz verwendet werden, das im Durchschnitt eineinhalb ungesättigte Bindungen pro Molekül enthält, das Verbindungen der allgemeinen Formel III,

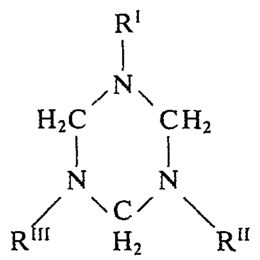

(III)

in welcher $R^I$, $R^{II}$ und $R^{III}$ Wasserstoff, ein gesättigter aliphatischer oder aromatischer Kohlenwasserstoffrest mit bis zu 20 C-Atomen,

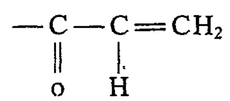

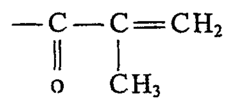

oder

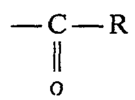

bedeuten, wobei R Wasserstoff, ein gesättigter oder ungesättigter aliphatischer oder aromatischer Kohlenwasserstoffrest mit bis zu 20 C-Atomen bedeutet, enthält.

Typische Vertreter sind:

1,3-Diacryloyl-5-butyl-hexahydro-s-triazin,
1,3,5-Trimethacryloyl-hexahydro-s-triazin,
1,3-Dimethacryloyl-5-butyryl-hexahydro-s-triazin

Verbindungen dieser Art können nach US-PS 2 615 882 hergestellt werden.

Im folgenden wird die Erfindung anhand von Beispielen und der Zeichnungen näher erläutert. Es zeigen in schematischer Darstellung Fig. 1 eine Anlage zur kontinuierlichen Herstellung von planen Schichtstoffen und Fig. 2 eine Anlage zur Herstellung von Hohlkörpern.

In Fig. 1 ist eine Anlage zur kontinuierlichen Herstellung von Schichtstoffen schematisch dargestellt, wobei die Papierbahnen von den Rollen 1 und 1′ abgewickelt und über die Umlenkrollen 2 und 2′ in die Bäder 3 bzw. 3′ geführt werden, in denen sich die Imprägnierflüssigkeiten befinden. In den Bädern sind Umlenkrollen 4 und 5 bzw. 4′ und 5′ an welchen die Papierbahnen umgelenkt werden, vorgesehen, weiter befinden sich in den Bädern die Rollen 6 und 7 bzw. 6′ und 7′, welche in den Fällen, wo eine zwei- oder mehrlagige Bahn durch das Bad geführt wird, die einzelnen Lagen der Bahn gegeneinander pressen und für eine Entfernung der Luft sorgen. Die Rollen 8 und 9 bzw. 8′ und 9′ bewirken eine Begrenzung der Beladung der Bahnen mit Imprägnierflüssigkeit. An den Rollen 10 und 11 werden die

Papierbahnen in engen Kontakt miteinander gebracht. Die nunmehr vereinigte Papierbahn 12 wird während des Kontakts mit dem Endlosband 13 durch die Rollen 15 und 16 unter dem Elektronenbeschleuniger 14 vorbeigezogen und zu einem Laminat verbunden, das zu Platten verarbeitet wird.

Die in Fig. 2 schematisch dargestellte Anlage dient zur Herstellung von Hohlkörpern, wobei die Papierbahnen dem gleichen Imprägniervorgang wie in Fig. 1 unterworfen werden. Durch das Zusammenspiel der Rolle 17 mit dem rotierenden Dorn 18 wird die Papierbahn 12 aufgewickelt und während des Wickelvorganges erfolgt durch die Bestrahlung mit dem Elektronenbeschleuniger 14 eine Verbindung der übereinanderliegenden Schichten.

Bei beiden Anlagen befindet sich die Papierbahn während der Bestrahlung unter Zug und zwar wird einerseits durch die Rollen 10 und 11 und die Rollen 15 und 16 die Papierbahn einem Zug ausgesetzt, wohingegen bei der Vorrichtung nach Fig. 2 durch den um seine Achse drehenden Dorn 18 und durch die Rolle 17 der Zug auf die Papierbahn ausgeübt wird.

Zu den in den Fig. 1 und 2 als Rollenpaare dargestellten Rollen 10 und 11 sei ergänzend festgehalten, daß diese nicht als Druckrollen ausgeführt sein müssen. Die Aufgabe dieser Rollen besteht darin, die Papierbahnen in zueinander parallele Positionen in so engem Abstand zueinander zusammenzuführen, daß ein Verbinden der Bahnen an der Stelle der Polymerisation mittels der Bestrahlungseinrichtung 14 mit Sicherheit gewährleistet ist. Den Rollen 10 und 11 kommt also die Aufgabe des Führend der Bahnen in eine optimale gegenseitige Position zueinander zu und keineswegs jene, die Bahnen aufeinander zu pressen. Ein solches Pressen hätte deshalb keinen Sinn, da die mit der Kunstharz-Lösung getränkten Bahnen — bei dennen eine Vorpolymerisation der Tränkung und das Hervorrufen einer klebrigen Oberfläche nicht erfolgt, bei dem Pressen nur »ausgequetscht« würden und einen Teil der von ihnen aufgenommenen Lösung des polymerisierbaren Kunstharzes verlören, woran verständlicherweise kein Interesse besteht.

## Beispiel 1

Ein α-Cellulosepapier mit einem Aschegehalt von 0,12 Gew.-%, einem Aufsaugvermögen nach Klemm von 35 mm und einem Flächengewicht von 90 g/m² wird mit einer Imprägnierflüssigkeit, bestehend zu 60 Teilen aus einem Reaktionsprodukt aus Hexakismethoxymethylmelamin und Hydroxyäthylacrylat im Molverhältnis 1 : 2,5 und 40 Teilen Hexandioldiacrylat in der Anlage gemäß Fig. 1 getränkt, wobei 4 Papierbahnen durch das Bad geleitet wurden, so daß ein Schichtpaket aus 4 Lagen des mit 120% Imprägnierflüssigkeit beladenen Papiers unter dem Einfluß von Elektronenstrahlen zu einem Laminat verbunden wird. Die Bestrahlung erfolgt unter Intertgas mit 500 keV-Elektronen mit einer Dosis von 40 kGy, während 1 Sekunde, wobei der durch die Rollen ausgeübte Zug 1,5 N/cm beträgt. Die Papierbahnen haben beim Eintritt in die Bestrahlungseinrichtung, einen Elektronenbeschleuniger, noch Flüssigkeit enthalten. Das Laminat, dessen Lagen in Schichtrichtung unlösbar miteinander verbunden sind, ergibt bei der Ausprüfung die in der Tabelle angeführten Werte.

## Beispiel 2

Es wird wie in Beispiel vorgegangen, mit dem Unterschied, daß eine Imprägnierflüssigkeit bestehend zu 60 Teilen aus einem Reaktionsprodukt aus Hexakismethoxymethylmelamin und Tripropylenglykolmonomethacrylat im Molverhältnis 1 : 2,5 und 40 Teilen Hexandioldiacrylat verwendet wird.

## Beispiel 3

Es wird wie in Beispiel 1 vorgegangen, mit dem Unterschied, daß eine Imprägnierflüssigkeit bestehend zu 60 Teilen aus einem Reaktionsprodukt aus Hexakismethoxymethylmelamin und Hydroxyäthylacrylat im Molverhältnis 1 : 5 und 40 Teilen Hexandioldiacrylat verwendet wird.

## Beispiel 4

α-Cellulosepapiere mit einem Aschegehalt von 0,2 Gew.-%, einem Aufsaugvermögen nach Klemm von 40 mm bzw. 37 mm und einem Flächengewicht von 90 g/m² bzw. 120 g/m² werden mit einer Imprägnierflüssigkeit getränkt, bestehend zu 40 Teilen aus einem Reaktionsprodukt aus Trimethylolmelamin und Glycidylmethacrylat im Molverhältnis 1 : 3, 40 Teilen 2-Äthylhexylacrylat und 20 Teilen Butandioldiacrylat. Die Beladung beträgt 90 bzw. 110%. Die imprägnierten Papiere werden derart geschichtet, daß die mit dem geringeren Flächengewicht nach außen zu liegen kommen, und werden analog Beispiel 1 zu einem Laminat verbunden.

## Beispiel 5

Es wird wie in Beispiel 1 vorgegangen, mit dem Unterschied, daß eine Imprägnierflüssigkeit verwendet wird, bestehend zu 50 Teilen aus einem Reaktionsprodukt aus Melamin, Paraformaldehyd und Acrylamid im Molverhältnis 1 : 3 : 3, 30 Teilen Butandioldiacrylat und 20 Teilen Hydroxyäthylacrylat.

## Beispiel 6

Es wird wie in Beispiel 1 vorgegangen, mit dem Unterschied, daß eine Imprägnierflüssigkeit verwendet wird, bestehend zu 40 Teilen aus einem Reaktionsprodukt aus Triglycidylisocyanurat und Acrylsäure im Molverhältnis 1 : 3, 20 Teilen Polyäthylenglycoldiacrylat und 40 Teilen 2-Äthylhexylacrylat.

## Beispiel 7

Es wird wie in Beispiel 4 vorgegangen, mit dem Unterschied, daß eine Imprägnierflüssigkeit verwendet wird, bestehend aus 40 Teilen aus einem Reaktionsprodukt aus Trihydroxyäthylisocyanurat und Acrylsäure im Molverhältnis 1 : 2, 5, 20 Teilen Polyäthylenglycoldiacrylat und 40 Teilen 2-Äthylhexylacrylat.

## Beispiel 8

Es wird wie in Beispiel 1 vorgegangen, mit dem Unterschied, daß eine Imprägnierflüssigkeit verwendet wird, bestehend zu 10 Teilen aus einem Reaktionsprodukt aus Trioxan und Acrylnitril im Molverhälltnis 1 : 1, zu 30 Teilen aus einem Reaktionsprodukt aus Hexakismethoxymethylmelamin und Hydroxyäthylacrylat im Molverhältnis 1 : 2, 5 und zu 40 Teilen aus Hydroxyäthylacrylat.

## Beispiel 9

Es wird wie in Beispiel 1 vorgegangen, mit dem Unterschied, daß eine Imprägnierflüssigkeit verwendet wird, die zu 40 Teilen aus dem Reaktionsprodukt aus Beispiel 1, zu 20 Teilen eines Reaktionsproduktes aus Äthylenglycol, Triäthylenglycol, Glycerin, Maleinsäureanhydrid und Tetrahydrophthalsäureanhydrid im Molverhältnis 4 : 2,2 : 1 : 4 : 2 und 40 Teilen Hexandioldiacrylat besteht.

## Beispiel 10

Es wird wie in Beispiel 1 vorgegangen, mit dem Unterschied, daß das Schichtpaket während der Bestrahlung auf einer polierten Stahlplatte zu liegen kommt.

Das Laminat läßt sich leicht von der Stahlplatte lösen und zeichnet sich durch eine fehlerfreie und hochglänzende Oberfläche aus.

## Beispiel 11

Es wird wie in Beispiel 1 vorgegangen, mit dem Unterschied, daß das Schichtpaket mit einer Seite auf einem Holz oder Holzwerkstoff aufliegend bestrahlt wird.

Der so erhaltene Verband Holz- oder Holzwerkstoff-Laminat ist in Schichtrichtung unlösbar miteinander verbunden.

## Beispiel 12

Es wird wie in Beispiel 1 vorgegangen, mit dem Unterschied, daß bei Verwendung von 6 Lagen imprägnierten Papiers nach der zweiten, der dritten und nach der vierten Papierschicht je eine Lage einer Glasmatte eingebracht wird, die ein Flächengewicht von 60 g/m$^2$ besitzt und mit 100% Imprägnierflüssigkeit beladen ist. Der solcherart hergestellte Schichtverband wird durch Bestrahlen zu einem Laminat verbunden.

Beispiel 13

Es wird wie in Beispiel 1 vorgegangen, mit dem Unterschied, daß während der Bestrahlung das Schichtpaket mit der Unterseite auf einer vorbehandelten Aluminiumplatte zu liegen kommt. Nach dem Bestrahlen ist der so erhaltene Verband, Aluminium imprägniertes Papier, nicht ohne Zerstörung der einzelnen Schichten zu trennen.

Beispiel 14

Es wird wie in Beispiel 1 vorgegangen, mit dem Unterschied, daß das Schichtpaket während der Bestrahlung mit der Unterseite auf einer Kupferfolie zu liegen kommt, wobei der Imprägnierflüssigkeit der auf der Kupferfolie aufliegenden Papierschicht 5 Gew.-% Haftvermittler zugegeben wird.

Der so erhaltene Verband, Kupfer imprägniertes Papier, kann in Schichtrichtung nicht ohne Zerstörung von Papier- oder Kupferbahn gettrennt werden.

Beispiel 15

Es wird wie in Beispiel 1 vorgegangen, mit dem Unterschied, daß durch die Bestrahlung ein Stapel folgender unterschiedlich imprägnierter Papiere zu einem Laminat verbunden wird. Das Paket besteht aus zwei Lagen eines Natroncellulosepapiers mit dem Flächengewicht von 150 g/m$^2$ und einer Beladung von 100—110%, darüber ein pigmentiertes Papier mit dem Flächengewicht von 80 g/m$^2$ und einer Beladung von 60%, darüber ein bedrucktes Dekorpapier mit dem Flächengewicht von 80 g/m$^2$ und einer Beladung von 90—100% und als Deckblatt ein $\alpha$-Cellulosepapier mit dem Flächengewicht von 50 g/m$^2$ und einer Beladung von 120—130%. Das aus diesen durch die Bestrahlung untrennbar miteinander verbundenen Schichten bestehende Laminat ist als Dekorplatte verwendbar.

Beispiel 16

Es wird ein Schichtpaket wie in Beispiel 15 hergestellt, mit dem Unterschied, das zur Erzeugung einer hochglänzenden Oberfläche das Schichtpaket während der Bestrahlung mit der Dekorseite auf einer polierten Stahlplatte zu liegen kommt.

Beispiel 17

Es wird wie in Beispiel 15 vorgegangen, mit dem Unterschied, daß das Schichtpaket während der Bestrahlung mit der Unterseite auf einem Holz oder Holzwerkstoff zu liegen kommt und dadurch mit diesem verbunden wird.

Beispiel 18

Es wird wie in Beispiel 15 vorgegangen, mit dem Unterschied, daß das Schichtpaket während der Bestrahlung mit der Unterseite auf eine vorbehandelte Aluminiumplatte oder -folie zu liegen kommt und dadurch mit dieser fest verbunden ist.

Beispiel 19

Es wird wie in Beispiel 1 vorgegangen, jedoch erfolgt die Verarbeitung auf einer Anlage gemäß Fig. 2. Während des Bestrahlens wird das Papier über einen Dorn von 15 mm Radius gewunden, wodurch ein stabiler, rohrartiger Formkörper entsteht, der laufend vom Dorn abgezogen wird.

Beispiel 20

Es wird wie in Beispiel 1 vorgegangen, mit dem Unterschied, daß auf das Schichtpaket vor der Bestrahlung mittels einer Gießmaschine ein Lackfilm von 30 µm aufgebracht wird und in der Folge zugleich mit der Herstellung des Laminats eine Lackierung der Oberfläche erfolgt.

Unter Teilen und Prozenten sind, wenn nicht anders angeführt, Gewichtsteile zu verstehen. Die in den vorhergehenden Beispielen erhaltenen Proben erwiesen sich als fleckenunempfindlich nach DIN 53799 und erreichten die Rißanfälligkeitsstufe $\Phi$ nach DIN 53799. Die Oberflächen erwiesen sich

weiters gemäß DIN 53799 als beständig gegen Zigarettenglut und heiße Topfböden.

Von den Beispielen 1–9 wurden zu Vergleichszwecken nach DIN 53455 die Zugfestigkeit, die Dehnung beim Riß und nach DIN 53495 die Wasseraufnahme bei Lagerung in kaltem Wasser bestimmt.

| Beispiel Nr. | Zugfestigkeit (MPa) | Dehnung (%) | Wasser-aufnahme (%) |
|---|---|---|---|
| 1 | 79 | 1,3 | 2,4 |
| 2 | 77 | 2,0 | 2,5 |
| 3 | 83 | 0,9 | 2,7 |
| 4 | 78 | 1,8 | 3,4 |
| 5 | 75 | 1,2 | 3,6 |
| 6 | 67 | 2,2 | 3,1 |
| 7 | 69 | 2,2 | 2,7 |
| 8 | 77 | 1,4 | 3,7 |
| 9 | 64 | 1,6 | 3,5 |

**Patentansprüche**

1. Verfahren zur Herstellung von Schichtstoffen, wobei zumindest eine Schicht aus Papier mit einer ein polymerisierbares Kunstharz enthaltenden Lösung imprägniert und mit mindestens einer weiteren Schicht durch Aushärten des Kunstharzes mittels ionisierender Strahlen, insbesondere Elektronenstrahlen, verbunden wird, dadurch gekennzeichnet, daß die mit der Kunstharz enthaltenden Lösung imprägnierte, noch Flüssigkeit enthaltende Papierschicht mit der weiteren Schicht unter Zug, ohne Preßvorgang, zusammengeführte und verbunden wird, wobei die ionisierende Strahlung im Bereich der Zugbeanspruchung einwirkt.

2. Verfahren nach Anspruch 1, dadurch gekennzeichnet, daß die weitere Papierschicht mit einer Kunstharz enthaltenden Lösung imprägniert ist und noch Lösungsflüssigkeit enthält.

3. Verfahren nach Anspruch 1 oder 2, dadurch gekennzeichnet, daß die Papierschicht während der Einwirkung der Strahlen und des Zuges auf einer glatten Fläche aufliegt.

4. Verfahren nach einem der Ansprüche 1 bis 3, dadurch gekennzeichnet, daß die Papierschicht mit dem noch nicht gehärteten Kunstharz um einen Dorn oder dgl. gewunden wird.

5. Verfahren nach einem der Ansprüche 1 bis 4, dadurch gekennzeichnet, daß ein Kunstharz verwendet wird, das Verbindungen enthält, die im Durchschnitt mindestens eineinhalb $\alpha,\beta$-olefinisch ungesättigte Mono- oder Dikarbonsäuregruppen pro Molekül enthalten.

6. Verfahren nach Anspruch 5, dadurch gekennzeichnet, daß ein Kunstharz verwendet wird, das Verbindungen der allgemeinen Formel I

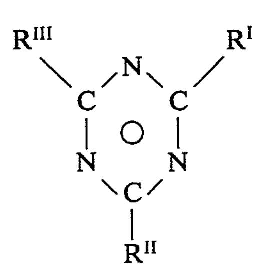

(I)

enthält, in der $R^I$, $R^{II}$ und $R^{III}$ unabhängig voneinander einen Hydroxylrest

oder – OR, worin R einen gesättigten oder ungesättigten aliphatischen oder aromatischen Kohlenwasserstoffrest mit bis zu 20 C-Atomen bedeutet,

oder 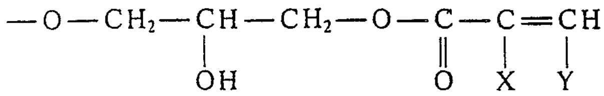

oder 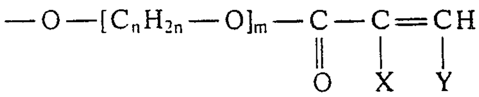

worin n eine ganze Zahl zwischen 2 und 20, m eine ganze Zahl zwischen 1 und 10, x Wasserstoff oder $-CH_3$ und y Wasserstoff, $-CH_3$, $-COOH$ oder $-COOR'$ bedeutet, worin R' für Wasserstoff steht oder die oben für R angeführte Bedeutung hat,

oder 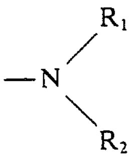

worin $R_1$ und $R_2$ unabhängig voneinander für Wasserstoff

oder für einen aromatischen, gesättigten oder ungesättigten aliphatischen Kohlenwasserstoffrest mit bis zu 20 C-Atomen

oder für $-CH_2OH$

oder für $-CH_2OR''$

worin R'' für einen gesättigten oder einfach ungesättigten aliphatischen Rest mit bis zu 20 C-Atomen steht,

oder für 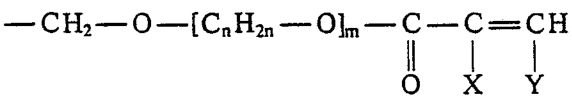

oder für 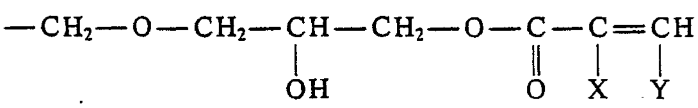

oder für 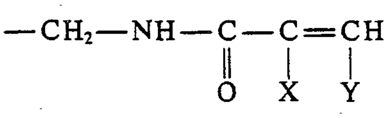

oder für 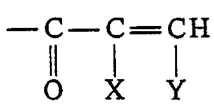

stehen, worin x, y, n und m die obenangeführte Bedeutung besitzen,

bedeuten.

7. Verfahren nach Anspruch 5 oder 6, dadurch gekennzeichnet, daß ein Kunstharz verwendet wird, das Verbindungen der allgemeinen Formel II

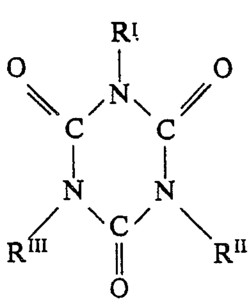

(II)

enthält, worin $R^I$, $R^{II}$ und $R^{III}$ unabhängig voneinander Wasserstoff

oder einen gesättigten oder ungesättigten aliphatischen oder aromatischen Rest mit bis zu 20 C-Atomen

oder 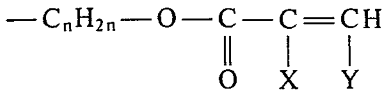

oder 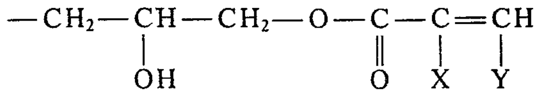

oder 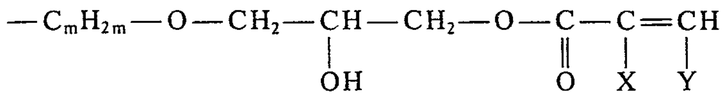

worin n eine ganze Zahl zwischen 2 und 20, m eine ganze Zahl zwischen 1 und 20, x Wasserstoff oder $-CH_3$ und y Wasserstoff, $-CH_3$ oder $-COOR$ bedeuten worin R für Wasserstoff, einen gesättigten oder ungesättigten aliphatischen oder aromatischen Kohlenwasserstoffrest mit bis zu 20 C-Atomen steht,
bedeuten.

8. Verfahren nach Anspruch 5, 6 oder 7, dadurch gekennzeichnet, daß ein Kunstharz verwendet wird, das Verbindungen der allgemeinen Formel III

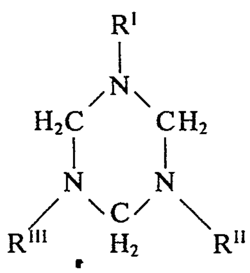

(III)

enthält, in welcher $R^I$, $R^{II}$ und $R^{III}$ unabhängig voneinander Wasserstoff

oder einen gesättigten aliphatischen oder aromatischen Kohlenwasserstoffrest mit bis zu 20 C-Atomen

oder 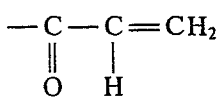

oder 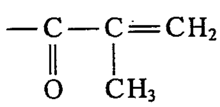

oder 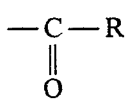

bedeuten, worin R für Wasserstoff, einen gesättigten oder ungesättigten aliphatischen oder aromatischen Kohlenwasserstoffrest mit bis zu 20 Kohlenstoffatomen steht.

**Claims**

1. A process for the preparation of laminated materials, wherein at least one layer of paper is impregnated with a solution containing a polymerisable synthetic resin and bonded to at least one further layer by setting the synthetic by means of ionising rays, in particular electron rays, characterised in that the paper layer impregnated with the solution containing the synthetic and still containing liquid is combined with and bonded to the further layer under tension and without pressing, with the ionising irradiation being effective within the area of tensile stress.

2. A process according to claim 1, wherein the further paper layer is impregnated with a solution

containing synthetic resin and still contains solution liquid.

3. A process according to claim 1 or 2, wherein the paper layer abuts a smooth surface during the exposure to irradiation and tension.

4. A process according to any one of the claims 1 to 3, wherein the paper layer with the still unset synthetic resin is wound around a mandrel or the like.

5. A process according to any one of the claims 1 to 4, wherein a synthetic resin containing compounds containing an average of at least one and a half $\alpha,\beta$-olefinic unsaturated mono- or dicarboxylic acid groups per molecule is employed.

6. A process according to claim 5, wherein a synthetic resin containing compounds of the general formula I

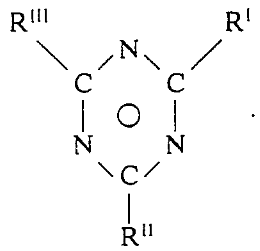

(I)

wherein $R^{I}$, $R^{II}$ and $R^{III}$ independently of one another represent a hydroxyl group

or $-OR$, wherein R stands for a saturated or unsaturated aliphatic or aromatic hydrocarbon group having up to 20 carbon atoms,

or 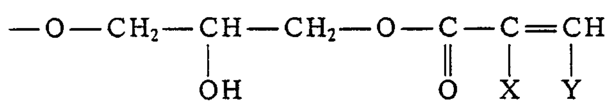

or 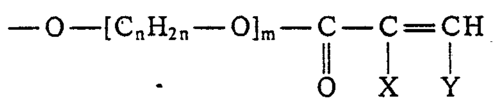

wherein n stands for an integer of 1 to 10, X represents hydrogen or $-CH_3$ and Y stands for hydrogen, $-CH_3$, $-COOH$ or $-COOR'$, wherein R' represents hydrogen or has the meaning indicated for R above,

or 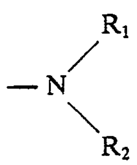

wherein $R_1$ and $R_2$ independently of one another stand for hydrogen

or for an aromatic, saturated or unsaturated aliphatic hydrocarbon group having up to 20 carbon atoms

or for $-CH_2OH$

or for $-CH_2OR''$

wherein R'' represents a saturated or mono-unsaturated aliphatic group having up to 20 carbon atoms,

or for 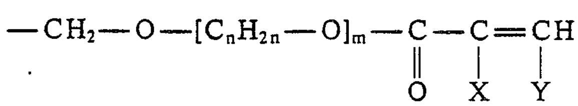

or for 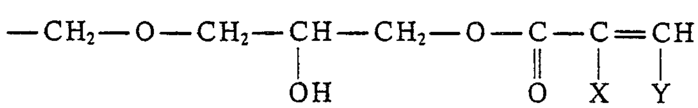

or for 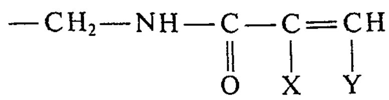

or for 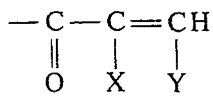

wherein X, Y, n and m have the meaning indicated above,

is employed.

7. A process according to claim 5 or 6, wherein a synthetic resin containing compounds of the general formula II

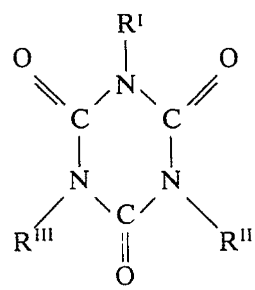

(II)

wherein $R^I$, $R^{II}$ and $R^{III}$ independently of one another represent hydrogen

or a saturated or unsaturated aliphatic or aromatic group having up to 20 carbon atoms

or 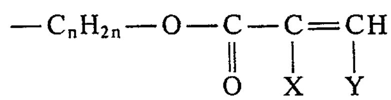

or 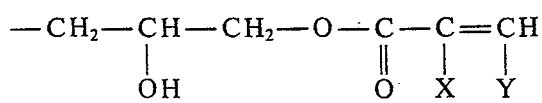

or 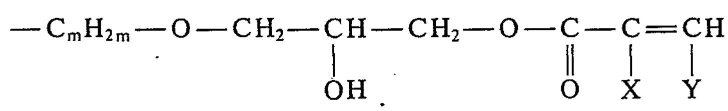

wherein n stands for an integer of 2 to 20, m represents an integer of 1 to 20, X stands for hydrogen or $-CH_3$ and Y represents hydrogen, $-CH_3$ or $-COOR$, wherein R stands for hydrogen, a saturated or unsaturated aliphatic or aromatic hydrocarbon group having up to 20 carbon atoms,

is employed.

8. A process according to claim 5, 6 or 7, wherein a synthetic resin containing compounds of the general formula III

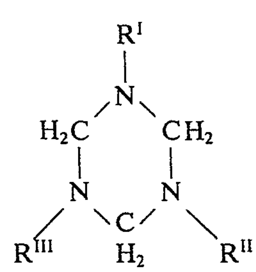

(III)

wherein $R^I$, $R^{II}$, $R^{III}$ independently of one another represent hydrogen

or a saturated aliphatic or aromatic hydrocarbon having up to 20 carbon atoms

or 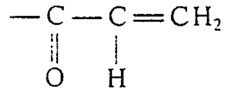

or 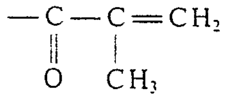

or 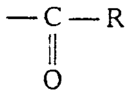

wherein R represents hydrogen, a saturated or unsaturated aliphatic or aromatic hydrocarbon group having up to 20 carbon atoms, is employed.

**Revendications**

1. Procédé de fabrication de produits stratifiés selon lequel au moins une couche de papier est impregnée d' une solution renfermant une résine synthétique polymérisable, et unie à au moins une autre couche par durcissement de la résine synthétique enprésence de radiations ionisantes, en particulier de radiations électroniques, caractérisé en ce que la couche de papier impregnée de la solution renfermant une résine synthétique et contenant encore du liquide, est appliquée contre l'autre couche par l'effet de la traction, sans compression, et unie à elle, les radiations ionisantes agissant dans la zone de la sollicitation de traction.

2. Procédé selon la revendication I, caractérisé en ce que l'autre couche de papier est impregnée d'une solution renfermant une résine synthétique et contenant encore du liquide.

3. Procédé selon la revendication 1 ou 2, caractérisé en ce que la couche de papier repose sur une surface lisse pendant l'exposition aux radiations et la sollicitation de traction.

4. Procédé selon une des revendications 1 à 3, caractérisé en ce que la couche de papier est enroulée sur un mandrin ou outil analogue, avant durcissement de la résine synthétique.

5. Procédé selon une des revendications 1 à 4, caractérisé en ce que l'on utilise une résine synthétique contenant des combinaisons renfermant en moyenne au moins un groupement et demi monocarboxylique ou dicarboxylique à insaturation oléfinique $\alpha,\beta$ par molécule.

6. Procédé selon la revendication 5, caractérisé en ce que l'on utilise une résine synthétique renfermant des combinaisons de la formule générale I

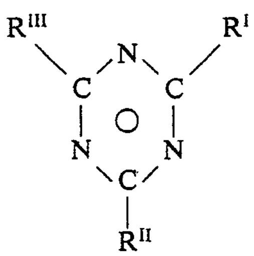

(I)

dans laquelle $R^I$, $R^{II}$ et $R^{III}$ représentent indépendamment l'un de l'autre, un reste hydroxylé

ou $-OR$, R représentant un reste hydrocarburé aromatique ou à saturation oléfinique avec jusqu'à 20 atomes de carbone,

ou 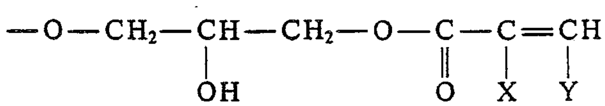

ou 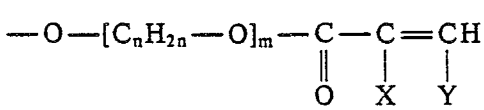

n étant un nombre entier entre 2 et 20, m un nombre entier entre 1 et 10, X un atome d'hydrogène ou $-CH_3$, et Y un atome d'hydrogène, $-CH_3$ $-COOH$ ou $-COOR'$, R' représentant un atome d'hydrogène ou ayant la signification indiquée ci-dessus pour R,

ou 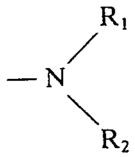

$R_1$ et $R_2$ représentant indépendamment l'un de l'autre un atome d'hydrogène

ou un reste hydrocarburé aromatique ou à saturation ou insaturation aliphatique avec jusqu'à 20 atomes de carbone

ou $—CH_2OH$

ou $—CH_2OR''$

R'' représentant un reste à saturation aliphatique avec jusqu'à 20 atomes de carbone,

ou 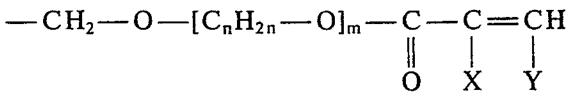

ou 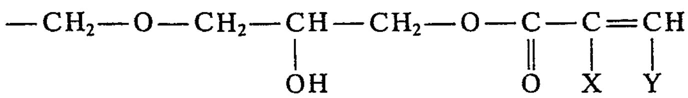

ou 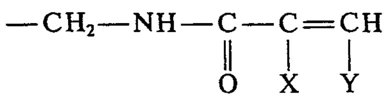

ou 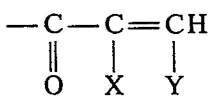

X, Y, n et m ayant la signification

indequée ci-dessus.

7. Procédé selon la revendication 5 ou 6, caractérisé en ce que l'on utilise une résine synthétique contenant des combinaisons de la formule générale II

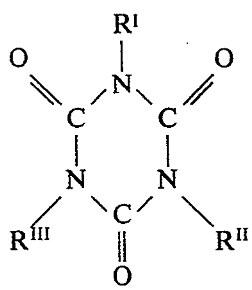

(II)

dans laquelle $R^I$, $R^{II}$ et $R^{III}$ représentant indépendamment l'un de L-autre un atome d'hydrogène

ou un reste aromatique ou à saturation ou insaturation aliphatique contenant jusqu'à 20 atomes de carbone

ou 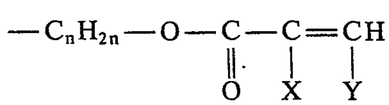

ou 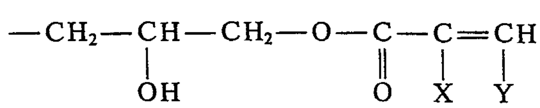

ou 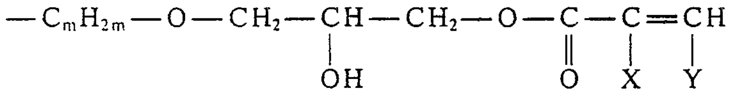

n étant un numbre entier entre 2 et 20, m un nombre entier entre 1 et 20, X un atome d'hydrogène ou $-CH_3$ et Y un atome d'hydrogène, $-CH_3$ ou $-COOR$, R représentant un atome d'hydrogène, un reste hydrocarburé aromatique ou à saturation ou insaturation aliphatique avec jusqu'à 20 atomes de carbone.

8. Procédé selon la revendication 5, 6 ou 7, caractérisé en ce que l'on utilise une résine synthétique contenant des combinaisons de la formule générale III

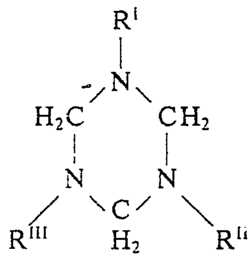

(III)

dans laquelle $R^I$, $R^{II}$ et $R^{III}$ représentant indépendamment l'un de l'autre un atome d'hydrogène

ou un reste hydrocarburé aromatique ou à saturation aliphatique contenant jusqu'à 20 atomes de carbone

ou 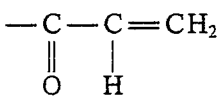

ou 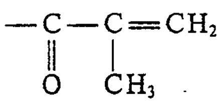

ou 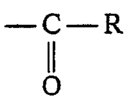

R représentant un atome d'hydrogène, ou un reste hydrocarburé aromatique ou à saturation ou insaturation aliphatique contenant jusqu'à 20 atomes de carbone.

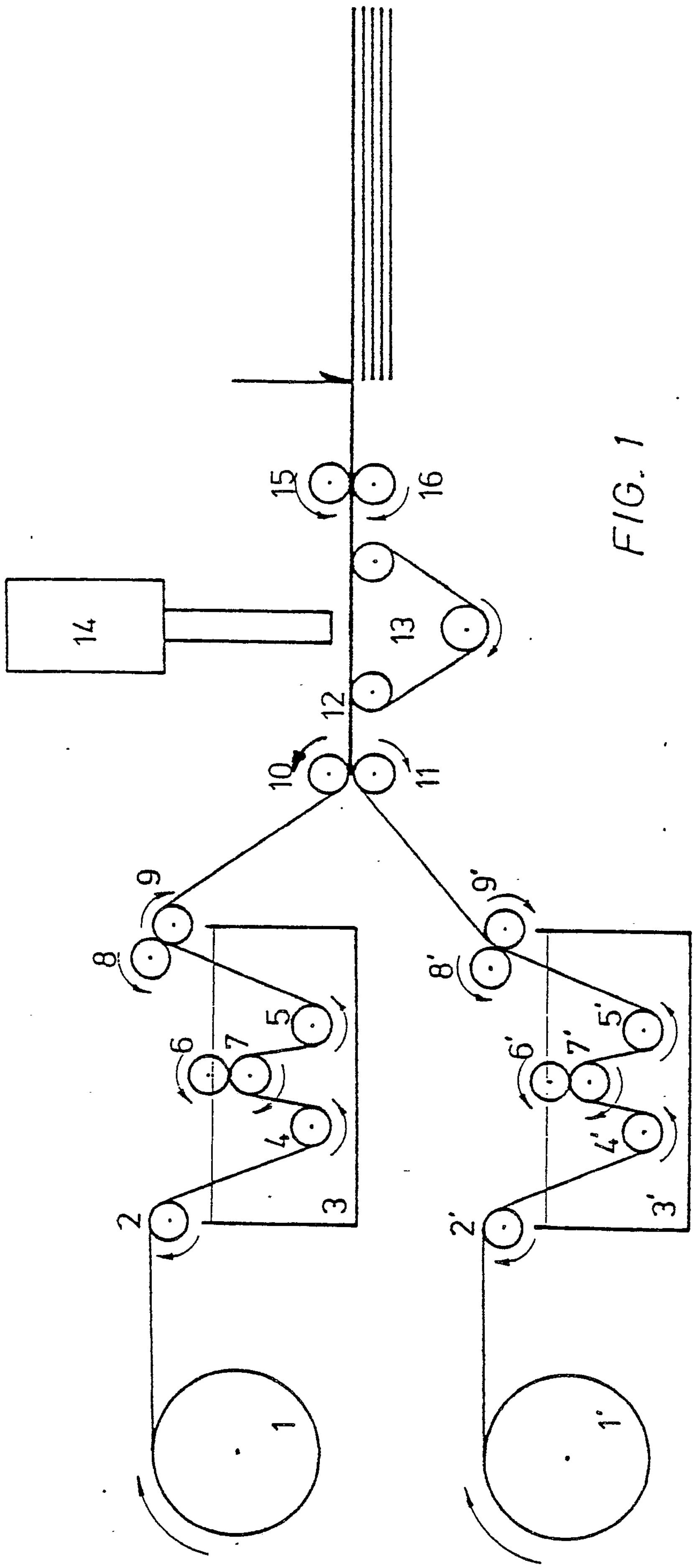


FIG. 1

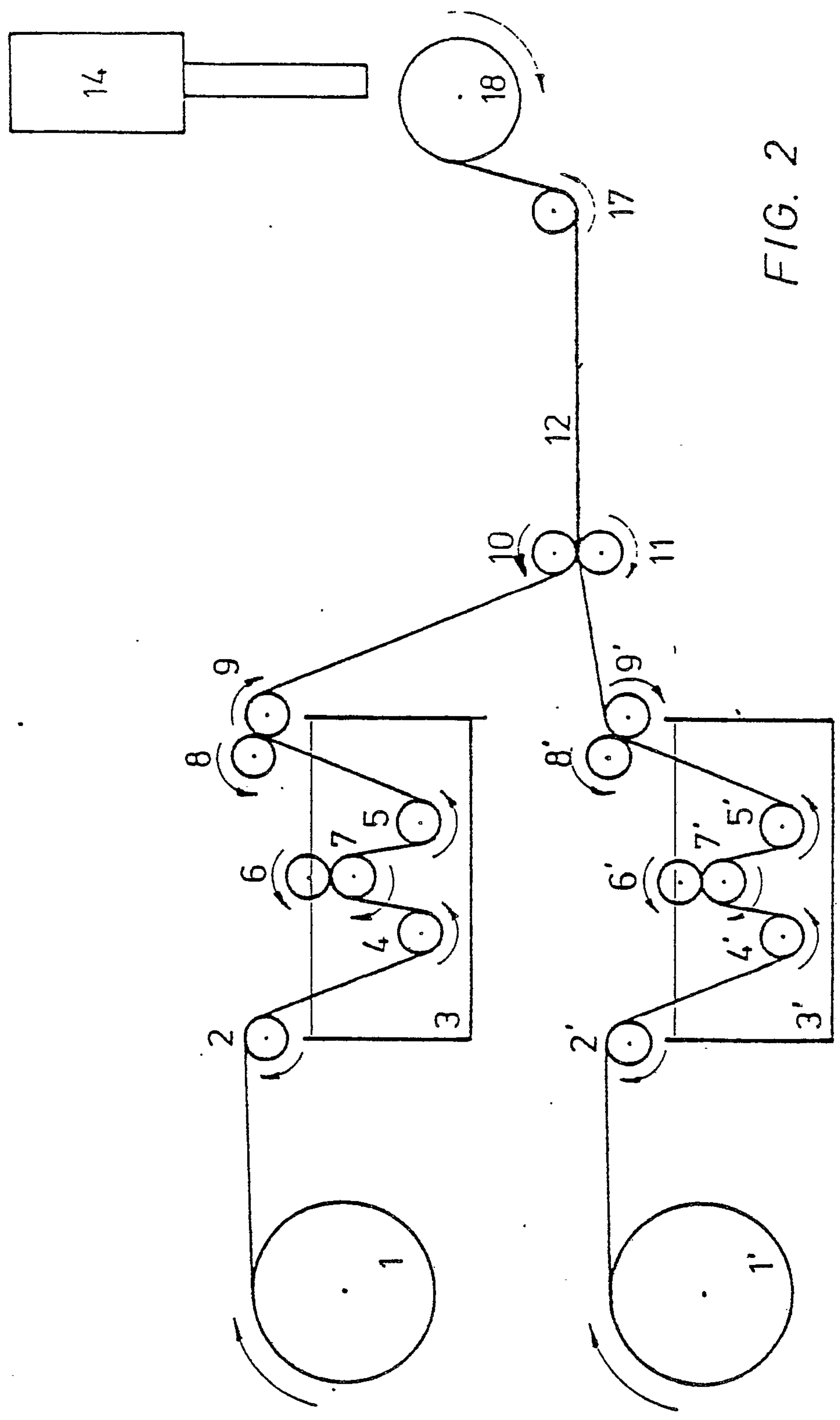


FIG. 2